(19) European Patent Office

Office européen des brevets

(11) Numéro de publication: **0 122 193**
**A1**

## (12) DEMANDE DE BREVET EUROPEEN

(21) Numéro de dépôt: **84400662.7**

(22) Date de dépôt: **04.04.84**

(51) Int. Cl.³: **G 07 F 7/00,** G 06 F 15/26

(30) Priorité: **08.04.83 FR 8305734**

(43) Date de publication de la demande: **17.10.84**
**Bulletin 84/42**

(84) Etats contractants désignés: **AT BE CH DE FR GB IT LI LU NL SE**

�]① Demandeur: **Armand, Daniel, 14, allée Théodorakis, F-91620 Nozay (FR)**

(72) Inventeur: **Armand, Daniel, 14, allée Théodorakis, F-91620 Nozay (FR)**

(54) Dispositif de réservation de courts de tennis.

㊾ L'invention concerne un dispositif permettant d'effectuer une réservation de courts de tennis, sans risque de voir modifier ladite réservation par une personne qui ne serait pas en possession de l'élément codé ayant autorisé cette réservation.

Le dispositif est constitué d'une console (7) et d'éléments d'accès codés (1) spécifiques à cette console. La console (7) renferme principalement une batterie (12) garantissant une alimentation en énergie, un circuit électronique (10) comprenant notamment un microprocesseur (11) et des mémoires (13). L'insertion d'un élément d'accès codé (1), identifié par un décodeur (9), autorise, après reconnaissance et par information sur un écran (4), la prise de données transmises manuellement sur un clavier (3). Ce clavier (3) constitue l'interface de dialogue entre un opérateur et la console pour toute opération d'interrogation, de réservation, d'annulation visualisables sur l'écran (4).

Le dispositif selon l'invention est particulièrement destiné à la réservation de courts de tennis, de salles de squash.

- 1 -

La présente invention concerne un dispositif destiné à la réservation de courts pour la pratique du tennis.

Dans les dispositifs connus de ce genre, la réservation peut s'opérer en déposant une carte d'affiliation au club sportif intéressé, dans une case d'un tableau qui contient autant de cases qu'il existe de courts et de tranches horaires disponibles.

De tels dispositifs, outre l'encombrement qu'ils exigent lorsqu'il existe une grande quantité de courts et de tranches horaires, ne sont pas sans provoquer des désagréments et mécontentements lorsque des pratiquants, ou autres individus peu scrupuleux, subtilisent ou déplacent les cartes préalablement déposées par d'autres adhérents, pour y insérer éventuellement les leurs.

Le dispositif de réservation selon l'invention, permet d'éviter ces inconvénients. Il se présente sous la forme d'éléments d'accès codés spécifiques à une console et d'une console intégrant tous les composants électroniques nécessaires à la gestion des réservations.

Cette console, adaptée à la gestion de plusieurs courts, est alimentée en énergie par le courant électrique fourni par le secteur et pourvue d'une batterie de secours en cas de coupure de courant. L'accès à toute opération au sein de cette console est rendu possible en utilisant une carte d'adhésion codée. Par codage, il faut entendre, le nom de l'adhérent, l'année de validation, le nom de l'organisme loueur et autres désignations susceptibles d'apporter des précisions particulières notamment sur la personnalité de l'adhérent, ce qui sous-entend que chaque adhérent possède un code particulier de même que chaque organisme loueur, ceci afin d'éviter l'utilisation d'une même carte d'un organisme à un autre. Cette carte, insérée dans une fente située sur le carénage de la console, est soumise à un lecteur qui autorise, après reconnaissance de sa validité, l'entrée de données par un clavier alphanumérique situé sur la façade de la console. Ce clavier sert d'interface de dialogue entre tout opérateur et la logique intégrée dans la console. Ce dialogue sera complété par une ligne de caractères alphanumériques située sur la façade de la console. Cette ligne de caractères reprend notamment, toute entrée de données provenant notamment du clavier afin de permettre un contrôle visuel de celles-ci, transmet toutes les indications sur le mode opératoire et ceci étape par étape, informe de la sélection opérée, indique l'acceptation ou le rejet d'une carte codée présentée à la lecture. Sur le clavier, l'adhérent peut sélectionner la tranche horaire et/ou le court souhaité et éventuellement le jour souhaité, et s'informe par lecture sur la ligne de caractères alphanumériques, de la disponibilité ou non de la sélection souhaitée. L'adhérent a pour possibilité de choisir de jouer au plus tôt ; dans ce cas la logique intégrée à la console, lui affecte le court correspondant à ce choix. Dans tous les cas, il appartient à l'opérateur de confirmer l'acceptation de réservation, en enfonçant, à l'issue de la procédure, la touche appropriée figurant sur le clavier. Une rangée de diodes électroluminescentes image la fréquentation du court prescrit ou choisi ou questionné, tandis qu'une mémorisation des instructions de réservation, qualifiées de variables, est opérée par l'électronique équipant la console. Cet ensemble électronique possède en mémoire fixe la désignation de toutes les cartes codées habilitées à opérer une réservation. Un microprocesseur assure la gestion totale des réservations, et a pour autre fonction principale, d'interdire l'accès à d'autres pratiquants sur un court pour un temps donné, si une opération de réservation identique a préalablement été effectuée.

L'utilisation du clavier permet en outre, à tout moment en utilisant une carte d'accès codée, de connaître la situation de fréquentation des courts :

- avant la réservation afin d'éviter de tâtonner,
- après la réservation pour se remémorer la tranche horaire et le court affectés à la carte codée présentée,
- après la réservation, pour annuler la réservation effectuée par la carte codée présentée à la console.

Une carte d'accès codée "passe-partout" autorise toutes les opérations pré-citées et les complète notamment en permettant l'entrée en mémoire fixe dans l'électronique de gestion d'informations d'interdictions d'accès aux réservations à un ou plusieurs numéros de codes (pour le cas de cartes égarées, adhérents suspendus) et en permettant de supprimer ces interdictions, d'interdire toute opération de réservation sur tel ou tel court durant une certaine période (cours, tournois, entretien, intempérie).

Une horloge intégrée à l'automatisme de gestion renseigne sur l'heure et remet à zéro les réservations qualifiées de variables au fur et à mesure du déroulement des tranches horaires. L'électronique de gestion interdit en outre, à une carte codée mémorisée pour une réservation, d'en effectuer une autre tant que la tranche horaire affectée ne s'est pas écoulée. Elle a pour autre possibilité d'autoriser une autre réservation avec la même carte, qu'après un certain nombre de tranches horaires. Cette électronique, par mémorisation fixe, est adaptable aux réglementations particulières à chaque organisme loueur et notamment aux quantités de courts, durée des modules de temps, nombre d'adhérents.

Cette console peut être connectée à un périphérique de sortie telle qu'une imprimante pour établir notamment un état de fréquentation des courts et une sauvegarde des réservations effectuées.

Parmi les cas de réalisations possibles de codifications de cartes figurent l'utilisation de codes magnétiques, codes à barres ou cartes perforées , cartes à mémoire , l'accès aux réservations est alors autorisé par un décodeur magnétique, lecteur de codes à barres, lecteur de cartes perforées, lecteur de cartes à mémoire.

Parmi les cas de réalisations possibles d'entrées de données dans la console figurent les claviers alphanumériques, numériques mécaniques, digitaux, les touches à impulsions, les analyseurs de paroles.

Parmi les cas de réalisations possibles d'indications d'informations figurent la ligne de caractères alphanumériques à diodes électroluminescentes ou à cristaux liquides, l'écran cathodique ou à cristaux liquides, un synthétiseur de paroles, un distributeur de tickets.

La console objet de l'invention peut résulter de la combinaison de ces différents sous-ensembles auxquels il convient de rajouter l'électronique de gestion.

La figure 1 représente, en perspective, une console selon l'invention.

La figure 2 représente un bloc-diagramme des fonctions principales remplies par la console.

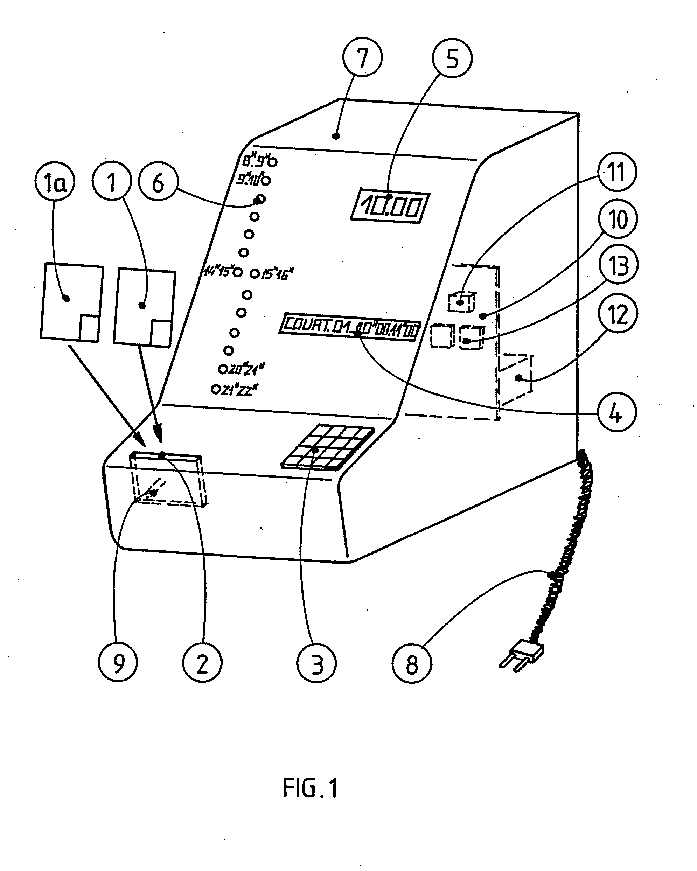

La console (7) représentée en figure 1 comporte un carénage enfermant un circuit électronique (10) associé à un microprocesseur (11) et des mémoires (13) renfermant les codes autorisés, les informations spécifiques au club, ainsi qu'une batterie (12) assurant le fonctionnement de l'appareil en cas de coupure de courant. Une prise de courant (8) assure l'alimentation en énergie électrique en utilisation normale. Sur la façade de la console, une fente (2) permet l'introduction de la carte d'accès codée (1). La ligne de caractères alphanumériques (4) transmet toute information d'accord ou de refus d'entrée de données après lecture de la carte codée par le décodeur (9) et analyse de comparaison avec le contenu des mémoires (13). Le clavier alphanumérique (3) autorise alors toute opération d'interrogation, d'accord de réservation, en données variables et d'annulation d'une réservation préalablement effectuée par ce support codé au sein des mémoires (13) intégrées dans le circuit électronique (10), tandis que la ligne de caractères alphanumériques (4) confirme toute action sur le clavier (3) et transmet toutes les informations de réservations possibles ou souhaitées. L'horloge (5) agit pour la gestion des modules de temps, pour la remise à zéro des informations variables inhérentes aux

- 4 -

réservations et contenues en mémoire (13) et pour l'information des pratiquants tandis que la colonne de diodes électroluminescentes (6) apporte une information visuelle sur l'état de fréquentation d'un (ou des) court (s).

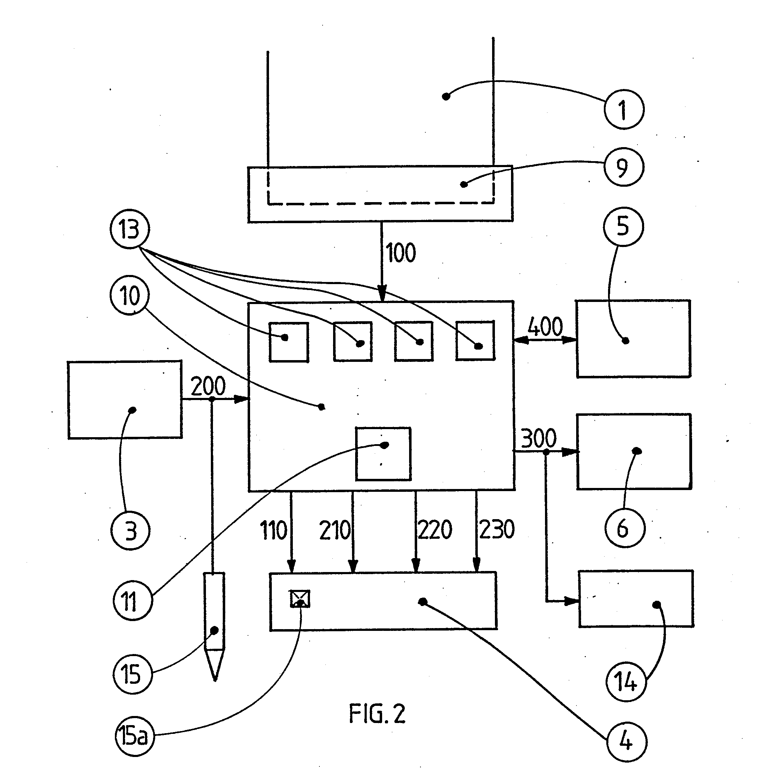

Le bloc-diagramme des fonctions principales selon la figure 2 présente un élément codé (1) soumis au décodeur (9). Les informations recueillies sont transmises par le bus (100) au circuit électronique (10) géré par le microprocesseur (11) et équipé des mémoires (13). Le bus (110) transmet à la ligne de caractères alphanumériques (4) les signaux qui se concrétisent en écriture informant l'opérateur du rejet pour carte non identifiée, ou de l'attente d'entrée de données. Au moyen du clavier (3) et par l'intermédiaire du bus (200), l'opérateur engage un dialogue avec l'ensemble (10), dialogue qu'il peut entretenir par une lecture de contrôle de son texte (210), des directives (220) et réponses (230) qui sont apportées à ses questions issues du clavier (3) et transmises par le bus (200). Une autre procédure de réservation consisterait à piloter un curseur (15a) ou déplacer un crayon adapté (15), et pointer l'objet de son choix qui apparaît sur l'écran (4) pour valider cette opération au sein du circuit électronique (10). Le bus (300) sert à l'information sur la colonne de diodes (6) de l'état de fréquentation d'un court, de même qu'à une confirmation sur la réservation effectuée et transcrite en sauvegarde sur l'imprimante (14). Le bus (400) transmet les signaux entre l'horloge (5) et le circuit (10) pour le déroulement des modules de temps et pour la remise à zéro des réservations lorsque ces modules sont écoulés.

La console selon l'invention est particulièrement destinée à la réservation de courts de tennis, de salles de squash, de golfs, de stands de tirs.

REVENDICATIONS

1) Dispositif de réservation de courts de tennis caractérisé en ce qu'il est constitué d'éléments d'accès codés (1) et d'une console (7) adaptée pour assurer l'enregistrement et la gestion des réservations de plusieurs courts simultanément, et où dans la dite console (7) sont logés, un décodeur (9) recevant des informations émanant d'un élément d'accès codé (1) transmettant les dites informations à un circuit électronique (10), et comprenant notamment un microprocesseur (11) et des mémoires (13), dans lequel est effectué une comparaison pour identifier l'élément d'accès codé (1), et afficher en cas de reconnaissance sur un écran (4), l'acceptation du-dit élément, et permettre à son utilisateur d'introduire, par l'intermédiaire d'un clavier (3), différentes informations afin de réserver, ou se remémorer ou annuler ou prendre connaissance de l'état de réservations d'un (ou des) court (s) qui apparaissent sur l'affichage (6), l'ensemble du dispositif étant géré en temps réel par une horloge (5) intégrée à la console (7) qui est alimentée en énergie électrique par une fiche (8) et assurée de son autonomie par une batterie (12).

2) Dispositif de réservation de courts de tennis selon la revendication 1 caractérisé en ce qu'il comporte des mémoires (13) dans lesquelles sont stockées des informations constantes telles que identité de l'organisme loueur, période de validation, numéros d'accès codés admis, numéros d'accès codés temporairement refusés, quantités de courts proposés à la location, modules de temps appliqués, interdiction à un support codé d'opérer d'autres réservations avant que celle préalablement effectuée avec ce support codé ne se soit écoulée, procédure pour un joueur se présentant seul, procédure pour assurer un jeu en simple ou en double, procédure suivant la qualification du joueur, procédure en cas de saturation des courts, l'ensemble permettant la personnalisation au club acquéreur et des informations variables inhérentes aux réservations effectuées.

3) Dispositif de réservation de courts de tennis selon les revendications 1 et 2 caractérisé en ce qu'il comporte un circuit électronique (10) comportant notamment un microprocesseur (11), et réalisant la comparaison des informations stockées au sein des mémoires (13) avec les informations portées sur un élément d'accès codé (1) présenté, la dite comparaison permettant l'accès ou le refus des informations possibles à l'aide de la console (7).

4) Dispositif de réservation de courts de tennis selon les revendications 1, 2 et 3 caractérisé en ce qu'il comporte des éléments d'accès codés du type (1) spécifiques à la console (7) et constitués d'un support d'informations, carte magnétique ou carte perforée ou carte avec code à barres ou carte à mémoire, sur lequel sont enregistrées des informations permettant d'identifier l'utilisateur, la période de validation, le club, les dites informations étant lues par le décodeur (9) puis exploitées par le microprocesseur (11) afin d'autoriser l'accès et d'engager le traitement choisi par l'utilisateur sur le clavier (3).

5) Dispositif de réservation de courts de tennis selon les revendications 1, 2, 3 et 4 caractérisé en ce qu'il comporte un élément d'accès codé "passe-partout" (1a), attribué au possesseur du dispositif, constitué d'un support d'informations, carte magnétique ou carte perforée ou carte avec code à barres ou carte à mémoire, sur lequel sont enregistrées des informations permettant d'identifier la période d'utilisation, le club, et d'attribuer toute opération prioritaire telles que annulation des réservations sur un (ou plusieurs) court (s), l'impossibilité de réserver un (ou des) court (s) pour une période de temps déterminé (cours, tournois, intempéries...), l'impossibilité d'effectuer toute opération sur la console (7) à un ou plusieurs éléments d'accès codés (éléments codés égarés, adhérents suspendus...), la possibilité de ré-autoriser ces dits éléments d'accès codés.

6) Dispositif de réservation de courts de tennis selon les revendications 1, 2, 3, 4 et 5 caractérisé en ce qu'il comporte un clavier (3) permettant après lecture par le décodeur (9) d'un élément d'accès codé (1) reconnu valable par le traitement subi par le microprocesseur (11), d'introduire dans le circuit électronique (10) afin de traitement, des choix de réservation (court, heure, jour), d'interrogation de l'état des réservations sur tel ou tel court, d'effectuer la validation de la réservation prescrite ou choisie, de rappeler les particularités de la réservation préalablement effectuée par ce support d'accès codé, d'annuler la réservation préalablement validée par ce support d'accès codé, et éventuellement de confirmer la présence du joueur dans un laps de temps déterminé avant l'horaire de jeu.

7) Dispositif de réservation de courts de tennis selon les revendications 1, 2, 3, 4, 5 et 6 caractérisé en ce qu'il comporte un écran de lecture (4) affecté à l'affichage des informations entrées et des informations obtenues après traitement de ces informations au sein du circuit électronique (10) comprenant notamment le microprocesseur (11) et les mémoires (13), le dit écran de lecture (4) étant constitué d'une ou de plusieurs lignes de caractères alphanumériques, ou d'un écran cathodique ou à cristaux liquides ou d'un synthétiseur de paroles remplaçant cet écran.

8) Dispositif de réservation de courts de tennis selon les revendications 1, 2, 3, 4, 5, 6 et 7 caractérisé en ce qu'il comporte une horloge (5) renseignant sur le jour et l'heure et délivrant au microprocesseur (11) les informations nécessaires à la gestion des modules de temps et à la remise à zéro des informations variables relatives aux réservations passées au fur et à mesure de l'écoulement du temps.

9) Dispositif de réservation de courts de tennis selon les revendications 1, 2, 3, 4, 5, 6 et 8 caractérisé en ce qu'il comporte une imprimante (14) permettant de réaliser un état de fréquentation des courts et une sauvegarde des réservations effectuées.

10) Dispositif de réservation de courts de tennis selon les revendications 1, 2, 3, 4, 5, 6, 7 et 8 caractérisé en ce qu'il comporte un crayon (15) ou un curseur (15a) que l'on peut déplacer sur l'écran (4), indiquant une image des variables de réservations telles que courts, tranches horaires, réservations en cours, pour pointer et valider son choix au sein du circuit électronique (10)

FIG.1

0122193

1/2

0122193

FIG.2

0122193

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | US-A-3 742 453  (M.C. POYLO)<br><br>* Abrégé; figure 1; colonne 2, ligne 35 - colonne 3, ligne 35 *<br><br>--- | 1-4,6, 7 | G 07 F    7/00<br>G 06 F   15/26 |
| A | US-A-3 445 633  (V.A. RATNER)<br><br>* Colonne 1, lignes 1-13; figures; revendication 1 *<br><br>--- | 1-4,6, 8,9 | |
| A | DE-A-2 854 229  (S.M. SPORTSTÄTTENBETRIEB)<br>* Revendication 1; figures 1,2; page 6 *<br><br>--- | 1 | |
| X,P | FR-A-2 517 091  (A. KUBLER)<br><br>* Page 2, ligne 34  - page 6, ligne 3; figures *<br><br>--- | 1-4,6-8 | |
| A | DE-C-2 641 792  (H. BOHNE)<br><br><br>--- | | |
| A | DE-C-2 452 591  (DORNIER SYSTEM GmbH)<br><br>----- | | |

### DOMAINES TECHNIQUES RECHERCHES (Int. Cl. ³)

G 07 F    7/00
G 07 F    7/02
G 07 F   17/40
G 06 F   15/26
G 07 C    9/00
G 07 C    1/22
G 07 C    1/24
G 07 C    1/28
A 63 B   71/06

Le présent rapport de recherche a été établi pour toutes les revendications

| Lieu de la recherche | Date d'achèvement de la recherche | Examinateur |
|---|---|---|
| LA HAYE | 16-07-1984 | DAVID J.Y.H. |